# EUROPEAN PATENT SPECIFICATION

(11) **EP 3 053 779 B1**
(45) Date of publication and mention of the grant of the patent: **18.10.2017**
(21) Application number: 16154202.2
(22) Date of filing: 04.02.2016
(51) Int. Cl.: B60R 1/06, B60R 1/072

(54) **VEHICULAR VIEWING DEVICE**
FAHRZEUGANSICHTSVORRICHTUNG
DISPOSITIF DE VISUALISATION D'UN VÉHICULE

(30) Priority: 05.02.2015 JP 2015021132
(43) Date of publication of application: 10.08.2016
(73) Proprietor: KABUSHIKI KAISHA TOKAI RIKA DENKI SEISAKUSHO, Niwa-gun, Aichi 480-0195 (JP)
(72) Inventor: ASAI, Hiroto, Niwa-gun, Aichi 480-0195 (JP); ICHIKAWA, Takashi, Niwa-gun, Aichi 480-0195 (JP); IWATSUKI, Masakazu, Niwa-gun, Aichi 480-0195 (JP)
(74) Representative: TBK

(56) References cited:
- US-A- 5 946 151
- US-A1- 2011 194 202
- US-A1- 2013 194 685

## Description

The present invention relates to a vehicular viewing device according to the preamble of claim 1.

### Related Art

In a vehicle door mirror device described in JP 2013-163498 A, a spherical face shaped inner peripheral face at a pivot center side of a mirror holder is supported, so as to be capable of pivoting, by a spherical face shaped outer peripheral face at a case inner side. By displacing a drive rod, the mirror holder and a mirror are pivoted to change a mirror face angle of the mirror.

Note that, in such vehicle door mirror devices, it is preferable that the mirror can be pivoted smoothly when the drive rod starts to be displaced.

US 2011/194202 A1 shows a generic vehicular viewing device according to the preamble of claim 1, which comprises a support body that is supported at a vehicle body side and that is provided with a support face; a viewing means that is provided, at a pivot center side, with a pivot face supported by the support face so as to be capable of pivoting, and that aids viewing by an occupant of the vehicle; and a displacement body that is connected to the viewing means and that is displaced such that the viewing means is pivoted and a viewing direction of the occupant aided by the viewing means is changed.

US 5 946 151 A shows an exterior rearview mirror assembly for an automobile. The mirror assembly comprises a mirror mount, a mirror associated with the mirror mount, a support structure which pivotably supports the mirror mount, and a connection assembly which secures the mirror mount to the support structure for pivotal motion relative to the support structure. The mirror mount has a hollow sleeve extending rearwardly therefrom. The support structure has a recess shaped to receive the mirror mount sleeve to allow the sleeve to pivot within the support structure recess and an elongate opening or slot through the recess. The connection assembly includes a pivot member sized and shaped to be positioned within the mirror mount sleeve, a lock key, and a resilient member. The lock key extends through the pivot member opening, the bottom of the sleeve, and the support structure opening to engage the support structure to hold the pivot member and the mirror mount to the support structure. The lock key has a "T" end which passes through spring, and the openings of the pivot member, the sleeve, and the support structure. The support structure opening is an elongate opening or a slot.

### SUMMARY OF THE INVENTION

It is the object of the present invention to further develop a generic vehicular viewing device according to the preamble of claim 1 such that rigidity of the support body and/or the viewing means is increased.

The object is achieved by a vehicular viewing device having the features of claim 1.

Further advantageous developments of the present invention are defined in the dependent claims.

It is an advantage of the present invention to provide a vehicular viewing device in which a viewing means can be pivoted smoothly when a displacement body starts to be displaced.

In the vehicular viewing device according to the present invention, the support face is provided at the support body that is supported at the vehicle body side, the viewing means is provided at the pivot center side with the pivot face that is supported by the support face so as to be capable of pivoting, and the viewing means aids viewing by the vehicle occupant. The displacement body is connected to the viewing means, and the displacement body is displaced such that the viewing means is pivoted and the viewing direction of the occupant aided by the viewing means is changed

Note that the limiting cavity provided at at least one of the support body or the viewing means is disposed at the opposite side from the support face or the pivot face across the center axis line passing through the pivot center of the viewing means parallel to the displacement direction of the displacement body, has the dimension about the center axis line at least equal to the dimension of the support face or the pivot face, and the limiting cavity limits input from the viewing means to the support body of displacement force of the displacement body. This enables the viewing means to be pivoted with respect to the support body, when the displacement body starts to be displaced, and enables the viewing means to be pivoted smoothly.

Preferably, the limiting cavity is disposed at a displacement body side of the center axis line, or at an opposite side of the center axis line to the displacement body.

According to this preferred vehicular viewing device of the present invention, the limiting cavity is disposed at the displacement body side of the center axis line, or at the opposite side of the center axis line to the displacement body. This enables the viewing means to be effectively pivoted with respect to the support body, when the displacement body starts to be displaced, and enables the viewing means to be pivoted more smoothly.

Preferably, the limiting cavity is a recessed portion.

This enables the rigidity of the at least one of the support body or the viewing means to be increased, and enables the supporting rigidity of the viewing means by the support body to be increased.

Preferably, the support body is configured to move.

This enables the viewing means to be pivoted easily with respect to the support body, when the displacement body is displaced, and enables the pivot action of the viewing means to be stabilized.

### BRIEF DESCRIPTION OF THE DRAWINGS

Exemplary embodiments of the present invention will be described in detail based on the following figures, wherein:
Fig. 1 is a cross-section (a cross-section along line 1-1 in Fig. 2) viewed from below, illustrating a mirror face adjustment device of a vehicle door mirror device according to an exemplary embodiment of the present invention;
Fig. 2 is a face-on view viewed from the vehicle rear, illustrating the mirror face adjustment device of the vehicle door mirror device according to the exemplary embodiment of the present invention;
Fig. 3 is a face-on view viewed from the vehicle rear, illustrating a case, and so on of the mirror face adjustment device of the vehicle door mirror device according to the exemplary embodiment of the present invention;
Fig. 4A is a side view illustrating a support pivot of the mirror face adjustment device of the vehicle door mirror device according to the exemplary embodiment of the present invention;
Fig. 4B is a lower face view illustrating the support pivot of the mirror face adjustment device of the vehicle door mirror device according to the exemplary embodiment of the present invention;
Fig. 5A is a side view illustrating a first modified example of a support pivot of the mirror face adjustment device of the vehicle door mirror device according to the exemplary embodiment of the present invention;
Fig. 5B is a lower face view illustrating the first modified example of the support pivot of the mirror face adjustment device of the vehicle door mirror device according to the exemplary embodiment of the present invention;
Fig. 6A is a lower face view illustrating a second modified example of a support pivot of the mirror face adjustment device of the vehicle door mirror device according to the exemplary embodiment of the present invention;
Fig. 6B is a lower face view illustrating a third modified example of a support pivot of the mirror face adjustment device of the vehicle door mirror device according to the exemplary embodiment of the present invention; and
Fig. 6C is a lower face view illustrating a fourth modified example of a support pivot of the mirror face adjustment device of the vehicle door mirror device according to the exemplary embodiment of the present invention.

### DETAILED DESCRIPTION

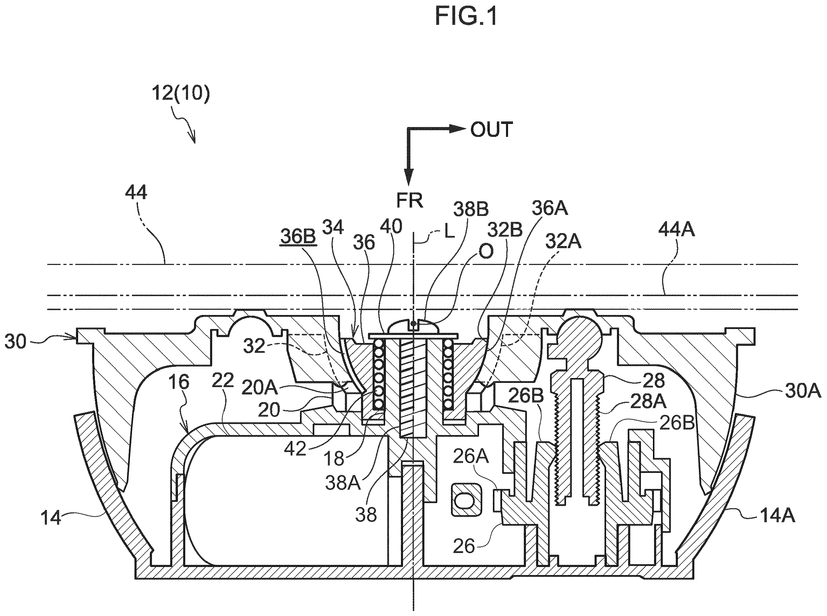

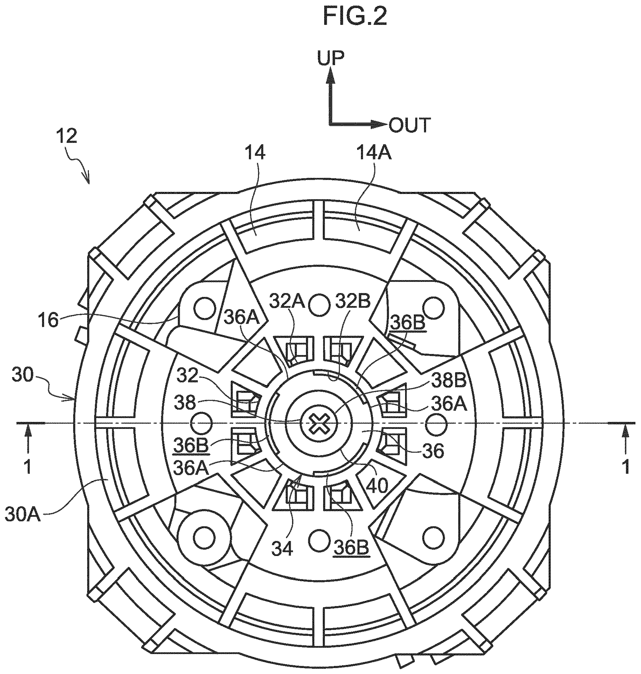

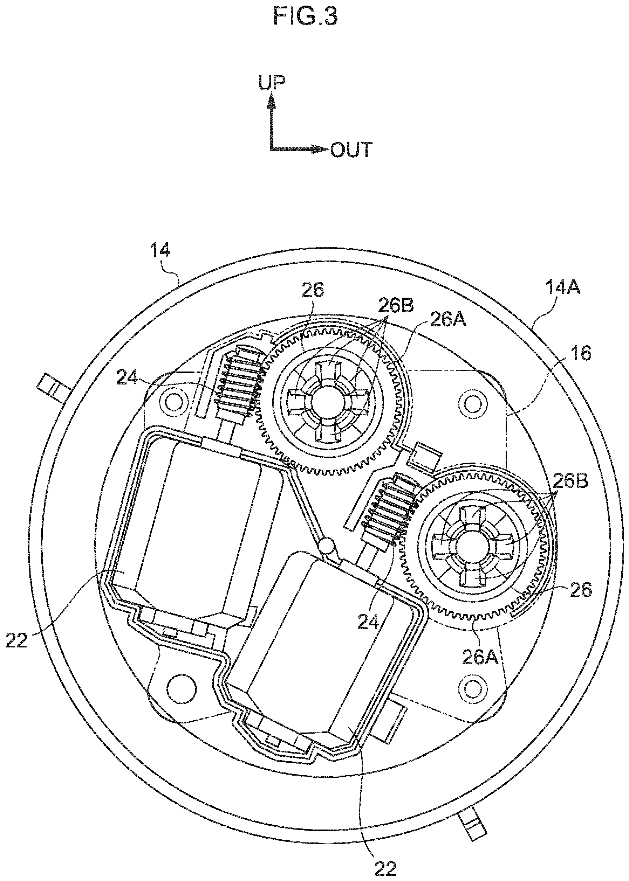

Fig. 1 is a cross-section (a cross-section along line 1-1 in Fig. 2) viewed from below, illustrating relevant portions of a vehicle door mirror device 10 according to an exemplary embodiment applied with a vehicle mirror device of the present invention. Fig. 2 is a face-on view viewed from the vehicle rear, illustrating relevant portions of the vehicle door mirror device 10. Fig. 3 is a face-on view viewed from the vehicle rear, illustrating some of the relevant portions of the vehicle door mirror device 10. Note that in the drawings, the arrow FR indicates the vehicle front, the arrow WO indicates the vehicle width direction outside, and the arrow UP indicates upward.

The vehicle door mirror device 10 according to the present exemplary embodiment is installed at the outside of a door (side door) of a vehicle, and a mirror face adjustment device 12, serving as a changing means, is provided at the interior of the vehicle door mirror device 10.

As illustrated in Fig. 1 to Fig. 3, the mirror face adjustment device 12 includes a substantially semispherical container shaped case 14, made from resin and serving as an outer peripheral support body, and the case 14 is fixed to the interior of the vehicle door mirror device 10. A vehicle rear side face of the case 14 is open in a circular shape, a bottom wall (vehicle front side wall) of the case 14 has a circular flat plate shape, and a peripheral wall 14A (outer peripheral support portion) of the case 14 is curved in a spherical wall shape. The vehicle rear side face (opening), the bottom wall, and the peripheral wall 14A of the case 14 are disposed coaxially to a center axis line L (see Fig. 1) parallel to the vehicle front-rear direction, this being the center axis line of the case 14. The peripheral wall 14A of the case 14 curves centered on a pivot center O (see Fig. 1) on the center axis line L.

A container shaped case inner 16, made from resin and serving as an outer support body, is fixed to the bottom wall inside the case 14, and a vehicle front side face of the case inner 16 is open. A circular tube shaped fixing tube 18 is integrally provided at a bottom wall (vehicle rear side wall) of the case inner 16. The fixing tube 18 projects out toward the vehicle rear side, and is disposed coaxially to the center axis line L.

A substantially circular tube shaped support wall 20, serving as an outer support section, is integrally provided at the bottom wall of the case inner 16 at the outer peripheral side of the fixing tube 18. The support wall 20 projects out toward the vehicle rear side, and is disposed coaxially to the center axis line L. An inner peripheral face of a vehicle rear side portion of the support wall 20 configures a spherical face shaped outer support face 20A, and the outer support face 20A is curved in a recessed shape centered on the pivot center O.

A pair of motors 22, serving as drive means, are provided inside the case 14, and the motors 22 are fixed between the bottom wall of the case 14 and the bottom wall of the case inner 16. A worm 24 is fixed to an output shaft of each motor 22.

A pair of substantially circular tube shaped wheel drives 26, serving as engagement members, are provided inside the case 14. Each wheel drive 26 is supported between the bottom wall of the case 14 and the bottom wall of the case inner 16 so as to be capable of rotating about its axis. The inside of each wheel drive 26 is open toward the vehicle rear side of the case inner 16 through the bottom wall of the case inner 16.

A worm wheel 26A is formed to each wheel drive 26, and the worm 24 of the respective motor 22 is meshed (engaged) with the worm wheel 26A. Thus, by driving the motors 22 to rotate the worms 24, the worm wheels 26A are rotated to rotate the wheel drives 26.

A specific number (four in the present exemplary embodiment) of meshing claws 26B, serving as engagement portions, are provided at each wheel drive 26. The specific number of meshing claws 26B are disposed at equal spacings around the circumferential direction of the wheel drive 26. The meshing claws 26B extend out from the wheel drive 26 toward the vehicle rear side, and have elasticity. A leading end (vehicle rear side end) of each meshing claw 26B projects out toward the radial direction inside of the wheel drive 26.

A substantially circular column shaped drive rod 28, serving as a displacement body, is coaxially inserted inside each wheel drive 26. The drive rod 28 projects out from the case inner 16 toward the vehicle rear side, and rotation about its axis is restricted. One of the drive rods 28 is disposed with its axial direction parallel to the center axis line L above (or below) the center axis line L, and the other drive rod 28 is disposed with its axial direction parallel to the center axis line L at the vehicle width direction outside (or at the vehicle width direction inside) of the center axis line L.

A portion of the drive rod 28 other than a leading end portion (vehicle rear side end portion) configures a thread 28A, and the leading ends of the meshing claws 26B of the respective wheel drive 26 are meshed (engaged) with the thread 28A. Thus, by rotating each wheel drive 26 (including the meshing claws 26B) as described above, a meshed position of the leading ends of the meshing claws 26B with the thread 28A is changed, such that the drive rod 28 is displaced along the vehicle front-rear direction (axial direction).

A resin mirror holder 30 with a bottomed, substantially circular tube shape, serving as a pivot member configuring a viewing means, is provided at the vehicle rear side of the case 14. The mirror holder 30 is disposed coaxially to the center axis line L. A vehicle front side face of the mirror holder 30 is open in a circular shape, a bottom wall (vehicle rear side end wall) of the mirror holder 30 has a substantially circular flat plate shape, and a peripheral wall 30A (outer peripheral pivot section) of the mirror holder 30 is curved in a spherical wall shape centered on the pivot center O. The peripheral wall 30A of the mirror holder 30 is disposed at the inner peripheral side of the peripheral wall 14A of the case 14, and the peripheral wall 30A of the mirror holder 30 is supported by the peripheral wall 14A of the case 14.

A substantially circular tube shaped inner wall 32, serving as a pivot section (inner peripheral pivot section), is integrally provided at a center portion of the bottom wall of the mirror holder 30. The inside of the inner wall 32 is open toward the vehicle front side and the vehicle rear side. The inner wall 32 is curved in a spherical wall shape centered on the pivot center O, and the inner wall 32 is disposed at the inner peripheral side of the support wall 20 of the case inner 16. An outer peripheral face of the inner wall 32 configures a spherical face shaped outer pivot face 32A, and an inner peripheral face of the inner wall 32 configures a spherical face shaped inner pivot face 32B, serving as a pivot face. The outer pivot face 32A is supported by (is in face-to-face contact with) the outer support face 20A of the support wall 20.

A resin support pivot 34 with a bottomed, substantially circular tube shape, serving as a support body (inner support body), is provided inside the inner wall 32, and the inside of the support pivot 34 is open toward the vehicle rear side. The fixing tube 18 of the case inner 16 coaxially penetrates the inside of the support pivot 34, and the support pivot 34 is disposed coaxially to the center axis line L.

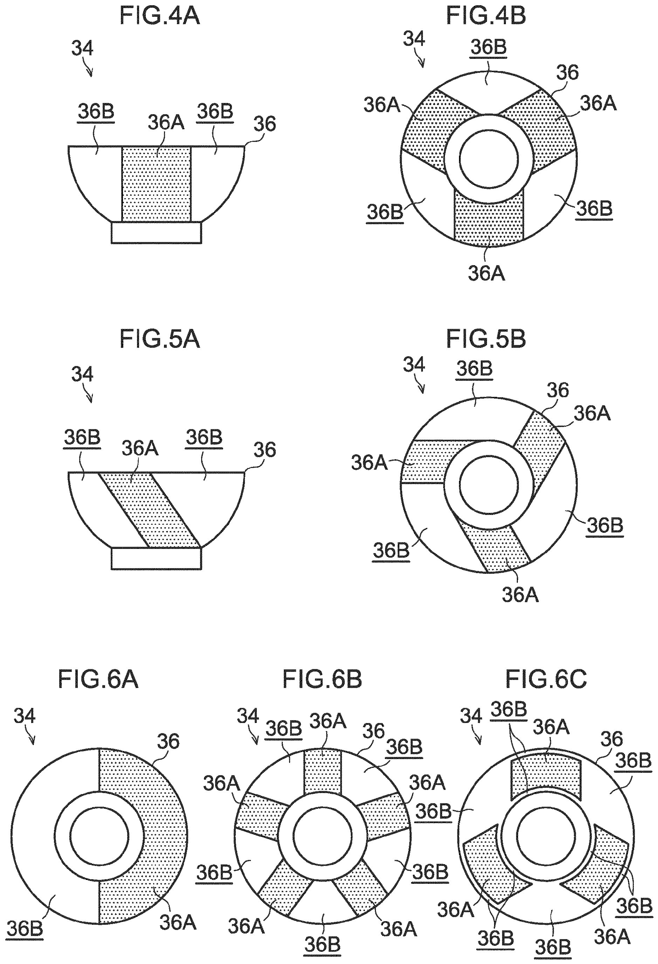

As illustrated in Fig. 4A and Fig. 4B, a portion of the support pivot 34 other than a vehicle front side end configures an inner support section 36, serving as a support section. The inner support section 36 is disposed coaxially to the center axis line L, and its outer diameter gradually increases on progression toward the vehicle rear.

Three inner support faces 36A, each serving as a support face, are formed to an outer peripheral face of the inner support section 36. The three inner support faces 36A respectively extend across the entire axial-circumferential direction of the inner support section 36, this being centered on the pivot center O and passing through the center axis line L, and are disposed at equal spacings centered on the center axis line L. The inner support faces 36A are each curved in a spherical face shape centered on the pivot center O, and the inner supporting faces 36A are in face-to-face contact with the inner pivot face 32B of the inner wall 32 of the mirror holder 30, and support the inner pivot face 32B.

Limiting recessed portions 36B, serving as limiting cavities, are formed to the outer peripheral face of the inner support section 36 between the inner support faces 36A about the center axis line L. The limiting recessed portions 36B are open from a vehicle rear side end of the inner support section 36, and, at the vehicle rear side end (maximum diameter portion) of the inner support section 36, each has a dimension about the center axis line L that is larger than that of the respective inner support face 36A. The limiting recessed portions 36B are disposed across the center axis line L on opposite sides to the respective inner support faces 36A. One of the inner support faces 36A is disposed at the other (the vehicle width direction outside) drive rod 28 side of the center axis line L, and the corresponding limiting recessed portion 36B is disposed at the opposite side of the center axis line L to the other drive rod 28.

As illustrated in Fig. 1, a thread portion 38A of a screw 38, configuring an attachment means, is coaxially screwed inside the fixing tube 18 of the case inner 16. The thread portion 38A of the screw 38 also coaxially penetrates inside a circular ring flat plate shaped washer 40, configuring the attachment means, and the washer 40 is clamped between the fixing tube 18 and a head portion 38B of the screw 38. A coil spring 42, serving as a biasing means (movement means), spans across between the washer 40 and a bottom wall (vehicle front side wall) of the support pivot 34. The coil spring 42 is compressed, and biases the support pivot 34 toward the vehicle front side. Thus, due to the biasing force of the coil spring 42, the inner wall 32 of the mirror holder 30 is clamped between the outer support face 20A of the support wall 20 of the case inner 16 and the inner support faces 36A of the inner support section 36 of the support pivot 34, and the peripheral wall 30A of the mirror holder 30 is press-contacted to the peripheral wall 14A of the case 14, attaching the mirror holder 30 to the case 14 and to the case inner 16. The support pivot 34 is configured to move toward the vehicle rear side against the biasing force of the coil spring 42.

The bottom wall (vehicle rear side wall) of the mirror holder 30 retains the leading end portion (vehicle rear side end portion) of each drive rod 28 so as to be capable of pivoting. By driving each motor 22 to displace the respective drive rod 28 along the vehicle front-rear direction as described above, the mirror holder 30 is pivoted about the pivot center O.

A mirror 44, serving as a main body section configuring the viewing means, is fitted so as to be capable of being attached and detached to the vehicle rear side of the bottom wall of the mirror holder 30. The mirror 44 is capable of pivoting integrally with the mirror holder 30. A mirror face 44A (the surface of a reflective layer at a back side) of the mirror 44 faces the vehicle rear side, and the mirror 44 is capable of aiding viewing of the vehicle rear side by a vehicle occupant.

Explanation follows regarding operation of the present exemplary embodiment.

In the mirror face adjustment device 12 of the vehicle door mirror device 10 with the above configuration, by driving each motor 22 to rotate the worm 24, the wheel drive 26 (including the worm wheel 26A and the specific number of meshing claws 26B) is rotated to displace the drive rod 28 along the vehicle front-rear direction. Thus, by pivoting the mirror holder 30 and the mirror 44 in at least one direction of the up-down direction and the vehicle width direction using the drive rods 28, an angle of the mirror face 44A of the mirror 44 is adjusted in at least the one direction of the up-down direction and the vehicle width direction (the viewing direction of the occupant aided by the mirror 44 is changed).

Note that the inner pivot face 32B of the inner wall 32 of the mirror holder 30 is supported by the inner support faces 36A of the inner support section 36 of the support pivot 34 due to the biasing force of the coil spring 42.

Note that the limiting recessed portions 36B of the inner support section 36 of the support pivot 34 are each disposed across the center axis line L at the opposite side from the respective inner support face 36A, and, at the vehicle rear side end of the inner support section 36, each has a larger dimension about the center axis line L than that of the inner support faces 36A. Input from the mirror holder 30 (inner wall 32) to the support pivot 34 (inner support section 36) of displacement force of the drive rods 28 toward the vehicle rear is thereby limited by the limiting recessed portions 36B (portions around the center axis line L).

Thus, when the drive rod 28 starts to be displaced toward the vehicle rear, the mirror holder 30 can be suppressed from moving, against the biasing force of the coil spring 42, toward the vehicle rear side integrally with the support pivot 34 in a state in which the displacement force of the drive rod 28 is input from the mirror holder 30 (inner wall 32) to the support pivot 34 (inner support section 36) around the entire center axis line L such that the mirror holder 30 (inner wall 32) does not pivot with respect to the support pivot 34 (inner support section 36). This thereby enables the mirror holder 30 (inner wall 32) to be pivoted with respect to the support pivot 34 (inner support section 36) when the drive rod 28 starts to be displaced toward the vehicle rear, and enables the mirror holder 30 and the mirror 44 to be pivoted smoothly.

Moreover, one of the limiting recessed portions 36B is disposed across the center axis line L at the opposite side from the other (vehicle width direction outside) drive rod 28. This enables the input from the mirror holder 30 (inner wall 32) to the support pivot 34 (inner support section 36) of displacement force of the other drive rod 28 toward the vehicle rear to be effectively limited by this limiting recessed portion 36B. This thereby enables the mirror holder 30 (inner wall 32) to be pivoted effectively with respect to the support pivot 34 (inner support section 36) when the other drive rod 28 starts to be displaced toward the vehicle rear, and enables the mirror holder 30 and the mirror 44 to be pivoted even more smoothly.

The support pivot 34 is configured to move toward the vehicle rear side against the biasing force of the coil spring 42. Thus, when the drive rod 28 is displaced along the vehicle front-rear direction, the mirror holder 30 (inner wall 32) can pivot easily with respect to the support pivot 34 (inner support section 36), and the pivot action of the mirror holder 30 and the mirror 44 can be stabilized.

The limiting recessed portions 36B are each formed in a recessed shape that does not penetrate the peripheral wall of the inner support section 36 of the support pivot 34. This enables the rigidity of the inner support section 36 to be increased, enables the supporting rigidity of the mirror holder 30 (inner wall 32) and the mirror 44 by the support pivot 34 (inner support section 36) to be increased, enables the mirror face 44A of the mirror 44 to be suppressed from shaking while the vehicle is travelling, and so on.

Note that in the present exemplary embodiment, one of the limiting recessed portions 36B is disposed across the center axis line L at the opposite side from the other (vehicle width direction outside) drive rod 28. However, one of the limiting recessed portions 36B may be disposed at the other drive rod 28 side of the center axis line L. One of the limiting recessed portions 36B may also be disposed across the center axis line L at the one (upper side) drive rod 28 side of the center axis line L, or at the opposite side from the one drive rod 28 side.

In the present exemplary embodiment, the maximum dimension of each of the limiting recessed portions 36B about the center axis line L is larger than that of the inner support faces 36A. However, it is sufficient that the maximum dimension of each of the limiting recessed portions 36B about the center axis line L is at least that of the inner support faces 36A.

In the present exemplary embodiment, the inner support faces 36A of the support pivot 34 (inner support section 36) extend in a axial-circumferential direction, which is centered on the pivot center O and passes through the center axis line L. However, as illustrated in Fig. 5A and Fig. 5B, for example, the inner support faces 36A of the support pivot 34 (inner support section 36) may be inclined in a direction that progresses around the center axis line L on progression along the axial-circumferential direction, which is centered on the pivot center O and passes through the center axis line L.

In the present exemplary embodiment, three inner support faces 36A and three limiting recessed portions 36B are respectively provided at the support pivot 34 (inner support section 36). However, as illustrated in Fig. 6A, for example, one or two inner support faces 36A and one or two limiting recessed portions 36B may be respectively provided at the support pivot 34 (inner support section 36). Alternatively, as illustrated in Fig. 6B, for example, four or more inner support faces 36A and four or more limiting recessed portions 36B may be respectively provided at the support pivot 34 (inner support section 36).

In the present exemplary embodiment, the inner support faces 36A are provided at the inner support section 36 of the support pivot 34 across the entire axial-circumferential direction, which is centered on the pivot center O and passes through the center axis line L. However, as illustrated in Fig. 6C, for example, inner support faces 36A may be provided at a portion (such as only an intermediate portion) of the inner support section 36 of the support pivot 34, a portion along the axial-circumferential direction centered on the pivot center O and passing through the center axis line L, and limiting recessed portions 36B may be provided at the axial-circumferential direction ends of the inner support faces 36A.

In the present exemplary embodiment, the limiting cavities of the present invention are the limiting recessed portions 36B. However, the limiting cavities of the present invention may be through-holes.

In the present exemplary embodiment, the limiting recessed portions 36B are provided at the inner support section 36 of the support pivot 34. However, together with this, or instead of this, limiting recessed portions 36B may be provided at the inner pivot face 32B side of the inner wall 32 of the mirror holder 30.

In the present exemplary embodiment, the vehicle door mirror device 10 is a vehicular viewing device of the present invention. However, a vehicular viewing device of the present invention may be another vehicle mirror device at the vehicle exterior or vehicle interior, or may be a vehicle camera device that aids viewing by a vehicle occupant using captured images.

In a vehicle door mirror device, an inner wall of a mirror holder is supported by an inner support face of an inner support section of a support pivot, and a drive rod is displaced to pivot the mirror holder and a mirror. Note that a limiting recessed portion of the inner support section is disposed across a center axis line at the opposite side from the inner support face, and has a larger dimension about the center axis line than that of the inner support face. Input from the inner wall to the inner support section of displacement force of the drive rod toward the vehicle rear is limited by the limiting recessed portion. Thus, when the drive rod starts to be displaced toward the vehicle rear, the inner wall can be pivoted with respect to the inner support section, and the mirror can be pivoted smoothly.

## Claims

1. A vehicular viewing device (10) comprising:
a support body (14, 16, 30) that is supported at a vehicle body side and that is provided with a support face (36A);
a viewing means (44) that is provided, at a pivot center side, with a pivot face (32A, 32B) supported by the support face (36A) so as to be capable of pivoting, and that aids viewing by an occupant of the vehicle;
a displacement body (28) that is connected to the viewing means (44) and that is displaced such that the viewing means (44) is pivoted and a viewing direction of the occupant aided by the viewing means (44) is changed; and
**characterized by** further comprising:
a limiting cavity (36B) that is provided at at least one of the support body (14, 16, 30) or the viewing means (44), that is disposed at an opposite side from the support face (36A) or the pivot face (32A, 32B), which is disposed at a face where the limiting cavity (36B) is disposed, across a center axis line (L) passing through a pivot center (O) of the viewing means (44) parallel to a displacement direction of the displacement body (28), that has a dimension about the center axis line (L) at least equal to the dimension of the support face (36A) or the pivot face (32A, 32B) which is disposed at the face, and that limits input from the viewing means (44) to the support body (14, 16, 30) of displacement force of the displacement body (28), when the viewing means (44) passes the limiting cavity (36B) or when the limiting cavity (36B) passes the support body (14, 16, 30).

2. The vehicular viewing device (10) of claim 1, wherein
the limiting cavity (36B) is disposed at a displacement body side of the center axis line (L), or at an opposite side of the center axis line (L) to the displacement body (28).

3. The vehicular viewing device (10) of claim 1 or claim 2, wherein the limiting cavity (36B) is a recessed portion (36B).

4. The vehicular viewing device (10) of any one of claim 1 to claim 3, wherein the support body (14, 16, 30) is configured to move.

5. The vehicular viewing device (10) of any one of claim 1 to claim 4, wherein
a maximum dimension of the limiting cavity (36B) about the center axis line (L) is at least equal to the dimension of the support face (36A) or the pivot face (32A, 32B) which is disposed at the face.

6. The vehicular viewing device (10) of any one of claim 1 to claim 5, wherein
the limiting cavity (36B) is disposed at an entire side of the support face (36A) or the pivot face (32A, 32B) about the center axis line (L).

7. The vehicular viewing device (10) of any one of claim 1 to claim 6, wherein
the limiting cavity (36B) extends in a circumferential direction centered on the pivot center (O) of the viewing means (44) and passing through the center axis line (L).

8. The vehicular viewing device (10) of any one of claim 1 to claim 6, wherein
the limiting cavity (36B) is inclined with respect to a circumferential direction centered on the pivot center (O) of the viewing means (44) and passing through the center axis line (L).

9. The vehicular viewing device (10) of any one of claim 1 to claim 8, wherein
the limiting cavity (36B), and the support face (36A) or the pivot face (32A, 32B), are disposed along a circumferential direction centered on the pivot center (O) of the viewing means (44) and passing through the center axis line (L).

10. The vehicular viewing device (10) of any one of claim 1 to claim 9, wherein
a plurality of the limiting cavities (36B) are provided at at least one of the support body (14, 16, 30) or the viewing means (44).

## Patentansprüche

1. Fahrzeugsichtvorrichtung (10), die Folgendes aufweist:
einen Stützkörper (14, 16, 30), der an einer Fahrzeugkörperseite gestützt ist und der mit einer Stützfläche (36A) vorgesehen ist;
eine Sichteinrichtung (44), die an einer Schwenkmittenseite mit einer Schwenkfläche (32A, 32B) vorgesehen ist, die durch die Stützfläche (36A) gestützt ist, um schwenken zu können, und die eine Sicht für einen Insassen des Fahrzeugs unterstützt;
einen Verstellkörper (28), der mit der Sichteinrichtung (44) verbunden ist und der derart verstellt wird, dass die Sichteinrichtung (44) geschwenkt wird und eine Sichtrichtung des Insassen, der durch die Sichteinrichtung (44) unterstützt wird, geändert wird; und
**dadurch gekennzeichnet, dass** sie des Weiteren Folgendes aufweist:
einen Begrenzungshohlraum (36B), der an zumindest einem/einer von dem Stützkörper (14, 16, 30) oder der Sichteinrichtung (44) vorgesehen ist, der an einer entgegengesetzten Seite von der Stützfläche (36A) oder der Schwenkfläche (32A, 32B), die an einer Fläche angeordnet ist, an der der Begrenzungshohlraum (36B) angeordnet ist, jenseits einer Mittelachsenlinie (L), die durch eine Schwenkmitte (O) der Sichteinrichtung (44) parallel zu einer Verstellrichtung des Verstellkörpers (28) hindurchtritt, angeordnet ist, der eine Abmessung um die Mittelachsenlinie (L) hat, die zumindest gleich wie die Abmessung der Stützfläche (36A) oder der Schwenkfläche (32A, 32B) ist, die an der Fläche angeordnet ist, und der eine Eingabe von der Sichteinrichtung (44) zu dem Stützkörper (14, 16, 30) der Verstellkraft des Verstellkörpers (28) begrenzt, wenn die Sichteinrichtung (44) den Begrenzungshohlraum (36B) passiert oder wenn der Begrenzungshohlraum (36B) den Stützkörper (14, 16, 30) passiert.

2. Fahrzeugsichtvorrichtung (10) nach Anspruch 1, wobei
der Begrenzungshohlraum (36B) an einer Verstellkörperseite der Mittelachsenlinie (L) oder an einer entgegengesetzten Seite der Mittelachsenlinie (L) zu dem Verstellkörper (28) angeordnet ist.

3. Fahrzeugsichtvorrichtung (10) nach Anspruch 1 oder Anspruch 2, wobei der Begrenzungshohlraum (36B) ein ausgesparter Abschnitt (36B) ist.

4. Fahrzeugsichtvorrichtung (10) nach einem der Ansprüche 1 bis 3, wobei der Stützkörper (14, 16, 30) gestaltet ist, um sich zu bewegen.

5. Fahrzeugsichtvorrichtung (10) nach einem der Ansprüche 1 bis 4, wobei
eine maximale Abmessung des Begrenzungshohlraums (36B) um die Mittelachsenlinie (L) zumindest gleich ist wie die Abmessung der Stützfläche (36A) oder der Schwenkfläche (32A, 32B), die an der Fläche angeordnet ist.

6. Fahrzeugsichtvorrichtung (10) nach einem der Ansprüche 1 bis 5, wobei
der Begrenzungshohlraum (36B) an einer gesamten Seite der Stützfläche (36A) oder der Schwenkfläche (32A, 32B) um die Mittelachsenlinie (L) angeordnet ist.

7. Fahrzeugsichtvorrichtung (10) nach einem der Ansprüche 1 bis 6, wobei
sich der Begrenzungshohlraum (36B) in einer Umfangsrichtung erstreckt, deren Mitte auf der Schwenkmitte (O) der Sichteinrichtung (44) liegt und die durch die Mittelachsenlinie (L) hindurchtritt.

8. Fahrzeugsichtvorrichtung (10) nach einem der Ansprüche 1 bis 6, wobei
der Begrenzungshohlraum (36B) in Bezug auf eine Umfangsrichtung geneigt ist, deren Mitte auf der Schwenkachse (O) der Sichteinrichtung (44) liegt und die durch die Mittelachsenlinie (L) hindurchtritt.

9. Fahrzeugsichtvorrichtung (10) nach einem der Ansprüche 1 bis 8, wobei
der Begrenzungshohlraum (36B) und die Stützfläche (36A) oder die Schwenkfläche (32A, 32B) entlang einer Umfangsrichtung angeordnet sind, deren Mitte auf der Schwenkmitte (O) der Sichteinrichtung (44) liegt und die durch die Mittelachsenlinie (L) hindurchtritt.

10. Fahrzeugsichtvorrichtung (10) nach einem der Ansprüche 1 bis 9, wobei
eine Vielzahl der Begrenzungshohlräume (36B) an zumindest einem/einer von dem Stützkörper (14, 16, 30) oder der Sichteinrichtung (44) vorgesehen ist.

## Revendications

1. Dispositif de visualisation de véhicule (10) comprenant :
un corps de support (14, 16, 30) qui est supporté du côté de la carrosserie du véhicule et qui est prévu avec une face de support (36A) ;
un moyen de visualisation (44) qui est prévu, du côté d'un centre de pivot, avec une face de pivot (32A, 32B) supportée par la face de support (36A) afin de pouvoir pivoter, et qui aide à la visualisation par un occupant du véhicule ;
un corps de déplacement (28) qui est raccordé au moyen de visualisation (44) et qui est déplacé de sorte que le moyen de visualisation (44) est pivoté et qu'une direction de visualisation de l'occupant assisté par le moyen de visualisation (44) est modifiée ; et
**caractérisé en ce qu'**il comprend en outre :
une cavité de limitation (36B) qui est prévue au niveau d'au moins l'un parmi le corps de support (14, 16, 30) ou le moyen de visualisation (44), qui est disposé au niveau d'un côté opposé à la face de support (36A) ou la face de pivot (32A, 32B), qui est disposé au niveau d'une face où la cavité de limitation (36B) est disposée, d'un côté à l'autre d'une ligne d'axe axial (L) passant par un centre de pivot (O) du moyen de visualisation (44) parallèlement à une direction de déplacement du corps de déplacement (28), qui a une dimension autour de la ligne d'axe central (L) au moins égale à la dimension de la face de support (36A) ou de la face de pivot (32A, 32B) qui est disposée au niveau de la face, et qui limite l'entrée du moyen de visualisation (44) au corps de support (14, 16, 30) de la force de déplacement du corps de déplacement (28), lorsque le moyen de visualisation (44) passe par la cavité de limitation (36B) ou lorsque la cavité de limitation (36B) passe par le corps de support (14, 16, 30).

2. Dispositif de visualisation de véhicule (10) selon la revendication 1, dans lequel :
la cavité de limitation (36B) est disposée du côté d'un corps de déplacement de la ligne d'axe central (L), ou d'un côté opposé de la ligne d'axe central (L) au corps de déplacement (28).

3. Dispositif de visualisation de véhicule (10) selon la revendication 1 ou la revendication 2, dans lequel la cavité de limitation (36B) est une partie évidée (36B).

4. Dispositif de visualisation de véhicule (10) selon l'une quelconque des revendications 1 à 3, dans lequel le corps de support (14, 16, 30) est configuré pour se déplacer.

5. Dispositif de visualisation de véhicule (10) selon l'une quelconque des revendications 1 à 4, dans lequel :
une dimension maximum de la cavité de limitation (36B) autour de la ligne d'axe central (L) est au moins égale à la dimension de la face de support (36A) ou de la face de pivot (32A, 32B) qui est disposée au niveau de la face.

6. Dispositif de visualisation de véhicule (10) selon l'une quelconque des revendications 1 à 5, dans lequel :
la cavité de limitation (36B) est disposée au niveau de tout le côté de la face de support (36A) ou de la face de pivot (32A, 32B) autour de la ligne d'axe central (L).

7. Dispositif de visualisation de véhicule (10) selon l'une quelconque des revendications 1 à 6, dans lequel :
la cavité de limitation (36B) s'étend dans une direction circonférentielle centrée sur le centre de pivot (O) du moyen de visualisation (44) et passant par la ligne d'axe central (L).

8. Dispositif de visualisation de véhicule (10) selon l'une quelconque des revendications 1 à 6, dans lequel :
la cavité de limitation (36b) est inclinée par rapport à une direction circonférentielle centrée sur le centre de pivot (O) du moyen de visualisation (44) et passant par la ligne d'axe central (L).

9. Dispositif de visualisation de véhicule (10) selon l'une quelconque des revendications 1 à 8, dans lequel :
la cavité de limitation (36B) et la face de support (36A) ou la face de pivot (32A, 32b) sont disposées le long d'une direction circonférentielle centrée sur le centre de pivot (O) du moyen de visualisation (44) et passant par la ligne d'axe central (L).

10. Dispositif de visualisation de véhicule (10) selon l'une quelconque des revendications 1 à 9, dans lequel :
une pluralité de cavités de limitation (36B) est prévue au niveau d'au moins l'un parmi le corps de support (14, 16, 30) ou le moyen de visualisation (44).
